# EUROPEAN PATENT APPLICATION

(11) **EP 2 938 114 A1**
(43) Date of publication of application: **28.10.2015**
(21) Application number: 14305596.0
(22) Date of filing: 23.04.2014
(51) Int. Cl.: H04W 16/06

(54) **Dynamic allocation of capacity licenses for a radio access network**

(71) Applicant: ALCATEL LUCENT, 92100 Boulogne-Billancourt (FR)
(72) Inventor: Beucher, Yannick, 44708 Orvault (FR); Picquet, Philippe, 91620 Nozay (FR)
(74) Representative: Hirsch & Associés

(57) **Abstract**

This invention relates to a capacity management system (CMs) for managing capacity licenses within a radio access network (RAN) comprising a set of network elements (BS1, BS2, BS3... BSn), said capacity management system comprising
- An interface (INT) for receiving from said network elements measurements (ml, m2, m3....mn) representative of capacity usage for the respective network element;
- Processing unit (PU) for testing of an overload situation for a given network element by comparing the measurement transmitted by said network element to a capacity license allocated to it; and,
- in case of overload situation for said given network element, providing through said interface and to said network element a supplementary capacity amount, for modifying said capacity license allocated to it.

## Description

### FIELD OF THE INVENTION

The invention relates to capacity licenses for radio access networks (RAN), and more particularly to a method and apparatus for managing the allocation to such capacity licenses within the radio access network.

### BACKGROUND OF THE INVENTION

Radio network operators have a global view of their network usage and forecasts of its evolution for the next months or years. When it considers purchasing next network devices, it is prepared to only buy for devices aligned with the network usage.

However, due notably to the decreasing cost of the hardware, manufacturers of radio network devices (routers, base stations, etc.) usually choses to deploy within the devices resources for large capacity (e.g. bandwidth, number of simultaneous connections, etc.)

Accordingly, the operator may only find on the market network devices which provides capacities larger to what it is looking for, and, consequently, at a larger price. As manufacturers do not wish to downgrade their pricing and jeopardize their business for larger capacities, a system based on capacity licenses has been designed throughout years.

The capacity license system aims at controlling the capacity of the usable network devices, regardless of their (real) hardware capacity. The capacity may comprise the number of simultaneous user connections, the maximum throughput, etc., authorized by cell, carrier, sector or base stations. Several embodiments can thus be possible to implement such a capacity license control.

The control of the capacity license is usually implemented by a system of "tokens", purchased by the operator. They are made available at a repository of the network operator and assigned by the operator to the different network elements of the radio network, e.g. the eNB (Node B).

Some solutions have been designed by providing a man-machine interface to an administrator of the radio access network (RAN), allowing it to assign tokens to the network elements.

This assignment may be performed according to statistics and forecasts of the network traffic, so that network elements impacted with more traffic are assigned more token than network elements with lower traffic.

However, the evolution of the network traffic is dynamic, and therefore such static assignments are sub-optimal. An administrator, whatever the man-machine interface, cannot handle the real-time nature of the traffic evolution of a radio access network.

In case of unexpected traffic growth in some area, some calls or connections can be rejected due to capacity license limitation (token), even if the purchase token would have been sufficient if assigned differently. As a result, the network accessibility rate and the quality of experience are impacted.

Consequently, the existing prior art solutions are not fully satisfactory and cannot address the issues that a RAN administrator may face.

### SUMMARY OF THE INVENTION

The object of the present invention is to alleviate at least partly the above mentioned drawbacks.

This object is achieved with a method for managing capacity licenses within a radio access network comprising a set of network elements, said method comprising
- Transmission by said network elements to a capacity management system of measurements representative of capacity usage for the respective network element;
- Test by said capacity management system of an overload situation for a given network element by comparing the measurement transmitted by said network element to a capacity license allocated to it;
- in case of overload situation for said given network element, providing to said network element a supplementary capacity amount, for modifying said capacity license allocated to it.

Preferred embodiments comprise one or more of the following features, which can be taken separately or together, either in partial combination or in full combination.
- said overload situation is tested for each network elements of said set.
- said network elements are base stations.
- said overload situation is determined when the difference between said measurement and said capacity license is below a given threshold.
- said supplementary capacity amount is determined from comparisons between measurements and capacity licenses associated with other network elements.
- said supplementary capacity amount is provided to said network element, only if said overload situation lasts during a predetermined duration.
- The method further comprises testing an under-load situation for a given network element by comparing the measurement transmitted by said network element to a capacity license allocated to it; and, in case under-load situation for said given network element, determining an available capacity amount, without modifying said capacity license allocated to it.

Another object of the invention is a computer program comprising computer-executable instructions for performing a method as previously defined when the program is run on a computer.

Another object of the invention is a capacity management system for managing capacity licenses within a radio access network comprising a set of network elements, said capacity management system comprising
- An interface for receiving from said network elements measurements representative of capacity usage for the respective network element;
- Processing unit for testing of an overload situation for a given network element by comparing the measurement transmitted by said network element to a capacity license allocated to it; and,
- in case of overload situation for said given network element, providing through said interface and to said network element a supplementary capacity amount, for modifying said capacity license allocated to it.

Preferred embodiments comprise one or more of the following features, which can be taken separately or together, either in partial combination or in full combination.
- said processing unit is adapted to test said overload situation for each network elements of said set.
- said processing unit is adapted to determine said overload situation when said the difference between said measurement and said capacity license is below a given threshold.
- Said processing unit (PU) is adapted to determine said supplementary capacity amount from comparisons between measurements and capacity licenses associated with other network elements stored in a memory.

- said processing unit is adapted to provide said supplementary capacity amount to said network element, only if said overload situation lasts during a predetermined duration.
- said processing unit is further adapted to test an under-load situation for a given network element by comparing the measurement transmitted by said network element to a capacity license allocated to it; and, in case under-load situation for said given network element, determine an available capacity amount, without modifying said capacity license allocated to it.

Another object of the invention is a radio access network comprising a system as previously defined.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows an example for a radio access network with a capacity management system according to the invention.
Fig. 2 shows an architecture of a base station according to an embodiment of the invention.
Fig. 3 shows a possible data structure for a memory embedded in the capacity management system according to embodiments of the invention.

### DETAILED DESCRIPTION OF THE INVENTION

A radio access network (RAN) is made of various types of network elements. Among these network elements, the base stations BS1, BS2, BS3...BSn are responsible for interfacing the traffic between the mobile terminals and the radio access network. The mobile terminals may be mobile phones, smartphones, tablets, or any data processing devices having a radio interface for exchanging voice or data traffic with a base station of the radio access network, RAN.

Typically, some network elements like the base stations are assigned a capacity license. This capacity license is determined by a business contract between the operator of the radio access network RAN and the manufacturer of the network element, so as to allow only a part of the resources of the network element to be usable for the traffic of the RAN.

In other words, the capacity license implies a software limitation to one or several communication parameters of the network element, e.g. the number of simultaneous user connections, the maximum throughput, the number of simultaneous voice-over-LTE calls etc., authorized by cell, carrier, sector or base stations. These parameters can be enforced for a given network element, or for a wider zone and then deployed to the impacted network element.

According to the invention, the radio access network RAN comprises a capacity management system CMS for managing these capacity licenses.

It comprises an interface INT for receiving measurements m1, m2, m3...mn transmitted by the network elements BS1, Bs2, BS3...BSn respectively. These measurements are representative of the capacity usage of the respective network element. They can be sent periodically by the network elements, for instance every 300 ms.

This duration may be configurable and may depend on the signaling network between the capacity management system CMS and the network elements. It should be set as a compromise between a low value, allowing the capacity management system CMS to track almost in real-time the evolution of the traffic, and a larger value which avoid adding too much signaling traffic on the network.

The capacity licenses are usually embodied as a token-based system. Tokens are provided to the network elements and represent a capacity amount: it could be a number of connections, an amount of allowed throughput, etc.

According to such an embodiment, the measurements can also be tokens. However, other embodiments can also be possible and accessible to the man skilled in the art, as long as they represent the capacity usage of the network elements.

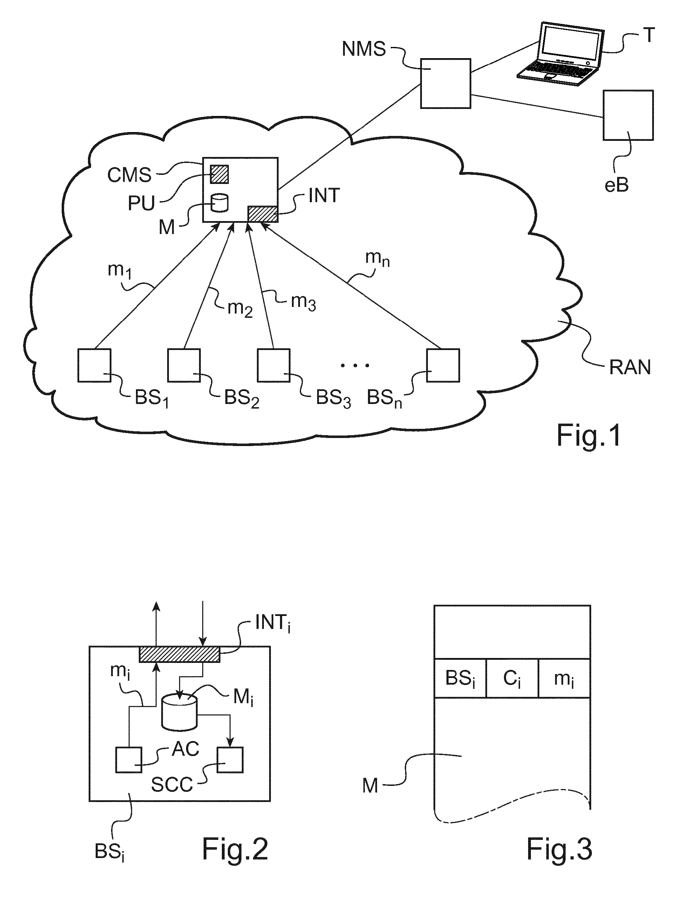

FIG. 2 represents a possible internal architecture of a network element BSi, like a base station. Only functions useful for the understanding of the invention have been depicted.

An active control function, AC, monitors the communication parameters inside the network elements. In a token-based implementation, it can act as a counter of the used token. It is piloted by a clock so as to transmit a measurement mi through the interface INTi.

The network element BSi further comprise a software capacity control function SCC, adapted to actually limit the communication parameter, according to a capacity license, stored in the memory Mi. Communication requests or throughput beyond this limit will be rejected by the software capacity control function SCC.

The capacity license can be modified by supplementary capacity amount Ci received from the capacity management system CMS through the interface INTi. This aspect will be detailed below.

The transmission of the measurements between the network element and the capacity management system CMS can be performed according to existing signaling or OAM (Operations And Maintenance) protocols. For instance, the SNMP (Simple Network Management Protocol) as defined by the IETF can be used, or the X2 signaling protocol. Proprietary protocols may also be used.

The capacity management system CMS also comprise a processing unit PU.

This processing unit PU is adapted for testing an overload situation for a given network element. This overload situation can be determined by comparing the measurement transmitted by this network element to a capacity license allocated to it.

For this purpose, a memory M can be provided to the capacity management system CMS.

FIG. 3 shows a possible implementation for this memory M. The memory can contain a data structure made of 3-tuples: an identifier of a base station BSi, the capacity license Ci assigned to it; and the most recent measurement mi.

This test can be performed for each network elements transmitting measurements to the capacity management system. For instance, all base stations of the radio access network can transmit measurements for such tests (with contrast to other network elements). In such a case, the data structure of the memory M is fulfilled with 3-tuples of all these network elements BS1, BS2, BS3...BSn.

In addition, the memory M can contain a number of unassigned token, i.e. an available capacity. This would help the operator to assign these tokens that have been bought.

The overload situation can be determined when the difference between the measurement mi and the capacity license Ci is below a given threshold.

The capacity license Ci can be considered as the upper limit for a communication parameter. When the actual usage, represented by the measurement mi, approaches this limit, then the network element can be considered as in an overload situation.

The threshold is a configuration parameter of the method.

For instance, if the capacity license Ci is at 50 tokens, a possible threshold could be 10, so that the overload situation starts when the measurements reaches 40 tokens.

The threshold can be set large enough to allow anticipating an overload situation: the traffic can grows quickly within a radio access network RAN, and it may be desirable to detect potential overload situation as soon as possible in order to trigger a reaction in the best conditions. It should however not be too large to avoid false detection and trigger too many reactions. In the latter case, the risk would be to overload the signaling network and the radio access network with too many policy modifications.

In case of overload situation for a given network element BSi, the processing unit PU can provide to this network element a supplementary capacity amount, for modifying the capacity license Ci allocated to it.

Accordingly the memory M can be modified to take into account the new provisioned capacity license Ci, as well as the memory Mi of the network element BSi, for the software capacity control function SCC to apply the new value to the communication traffic.

In the previous example where the capacity license is 50 tokens, a supplementary capacity amount of 10 tokens can be transmitted to the network element so that the new value for the capacity license Ci becomes 60 tokens. If the threshold is at 10 tokens, it means that, in this embodiment, when the measurement mi reaches 41 tokens, the capacity management system CMS anticipates the possible evolution of the RAN by setting the capacity license at 60 tokens.

Obviously, other values for the threshold and supplementary capacity amount can be designed, as well as other schemes defining other behaviors for the capacity management systems CMS. The invention should thus not be understood as limited to this particular algorithm.

According to an embodiment of the invention, the supplementary capacity amount is provided to the network element(s), only if the overload situation lasts during a predetermined duration.

As the dynamics of a radio access network can be both quick and large, this embodiment aims at capturing deep trends and at avoiding over-reactions to peak phenomena.

For instance, a given network element may stay around the limit (capacity license minus the threshold) for a certain duration, and move a bit above or a bit below, according to hand-overs or new communications implying an attached mobile terminal. It may be desirable to avoid provisioning of a supplementary capacity amount in such a situation, since the long-term evolution does not jeopardize the compliance with the set capacity license.

However, if this threshold keeps trespassed during sufficient time duration, then it may mean that the network element has experienced a traffic evolution which may, sooner or later, jeopardize the compliance with the capacity license. In this case, then, a reaction may be triggered and a supplementary capacity amount can be provided to the network element.

According to an embodiment of the invention, an under-load situation of a network element can also be tested by the processing unit PU. This test can be performed by comparing the measurement mi transmitted by the network element BSi to the capacity license Ci allocated to it

Similarly as for the overload situation, a threshold can be defined, much larger than the previous one, so that the over-load situation can be defined when the difference between the measurement mi and the capacity license Ci is larger than this threshold.

In case of under-load situation for a network element, the processing unit PU can determine an available capacity amount. This amount corresponds to the part of the capacity license that is not used by the network element, but can be reduced by a certain smaller amount, in order to avoid Ping-Pong effect.

According to the invention, this available capacity amount is memorized by the capacity management system CMS, but does not imply any modification of the capacity license. In other words, no signalization is transmitted from the capacity management system CMS to the network element BSi.

Such an embodiment has the advantages of limiting the signalization (and thus the risk of signalization congestion), and to avoid limiting the capacity of the network element BSi in situations where no other network elements are requiring further capacity.

For example, at night, the traffic may go down substantially in many, if not all, network element. It would have no benefit from a network perspective to reduce the capacity licenses of the network elements, since anyway the capacity would not be used. It is sufficient to determine, at the capacity management system CMS, the available capacity amount, so as to be ready to react in case of evolution of the traffic.

Knowing the available capacity amount, the capacity management system CMS is able to allow supplementary capacity amount to be provided to a requiring network element. At this time, then, the freed capacity amount can be deduced from the capacity licenses of the corresponding network element.

The invention has a centralized nature. The capacity management system CMS is in charge of keeping the information up-to-date and is therefore knowledgeable about the tokens deployed within the radio access network RAN. In addition, the capacity management system CMS implements the logics to determine the overload situations, the supplementary capacity amounts, etc.

Accordingly, any modification of this logics (configuration parameters, or even the algorithms themselves) can be made easy by simply updating the capacity management system CMS. Such an operation would be transparent for the network elements BSi.

It can be seen also that the network elements keeps being autonomous from the capacity management system CMS. In case of breakout of the communication between the network element and the capacity management system CMS, the network element keeps running according to the last value of the capacity license Ci, i.e. according to the prior art solutions.

It can also be possible to plug additional services on top of the capacity management system CMS.

Typically, the capacity management system CMS can interface with a Network Management System NMS, to open to such services.

For instance, when it runs out of available tokens, the capacity management system CMS can trigger some mechanisms like
- Alerting an administrator, through an user interface T;
- Interfacing with a business platform eB, for purchasing new tokens.

For the latter case, many different implementations can be possible, and such a purchase can be performed with the frame of a long-term business contract.

The invention is also successful in tracking and adapting to long-term evolutions of the network traffic like day/night patterns, week-end/working days patterns, massive people moves during vacations (coastlines in summer; ski resorts in winter...). It is also successful in avoiding Ping-Pong effects and to overload the signaling network and the network elements computing resources by modifying the capacity license for minor, short-term evolutions. Such a scheme seems optimal in terms of network management point of view.

The invention has been described with reference to preferred embodiments. However, many variations are possible within the scope of the invention.

## Claims

1. Method for managing capacity licenses within a radio access network (RAN) comprising a set of network elements (BS1, BS2, BS3... BSn), said method comprising
- Transmission by said network elements to a capacity management system (CMS) of measurements (m1, m2, m3....mn) representative of capacity usage for the respective network element;
- Test by said capacity management system of an overload situation for a given network element by comparing the measurement transmitted by said network element to a capacity license allocated to it;
- in case of overload situation for said given network element, providing to said network element a supplementary capacity amount, for modifying said capacity license allocated to it.

2. Method according to the previous claim, wherein said overload situation is tested for each network elements of said set.

3. Method according to any of claims 1 and 2, wherein said network elements are base stations.

4. Method according to any of the previous claims, wherein said overload situation is determined when the difference between said measurement and said capacity license is below a given threshold.

5. Method according to any of the previous claims, wherein said supplementary capacity amount is determined from comparisons between measurements and capacity licenses associated with other network elements.

6. Method according to any of the previous claims, wherein said supplementary capacity amount is provided to said network element, only if said overload situation lasts during a predetermined duration.

7. Method according to any of the previous claims, further comprising
- testing an under-load situation for a given network element by comparing the measurement transmitted by said network element to a capacity license allocated to it; and,
- in case under-load situation for said given network element, determining an available capacity amount, without modifying said capacity license allocated to it.

8. Computer program comprising computer-executable instructions for performing a method according to any of the previous claims when the program is run on a computer.

9. Capacity management system (CMS) for managing capacity licenses within a radio access network (RAN) comprising a set of network elements (BS1, BS2, BS3... BSn), said capacity management system comprising
- An interface (INT) for receiving from said network elements measurements (m1, m2, m3....mn) representative of capacity usage for the respective network element;
- Processing unit (PU) for testing of an overload situation for a given network element by comparing the measurement transmitted by said network element to a capacity license allocated to it; and,
- in case of overload situation for said given network element, providing through said interface and to said network element a supplementary capacity amount, for modifying said capacity license allocated to it.

10. Capacity Management system (CMS) according to the previous claim, wherein said processing unit (PU) is adapted to test said overload situation for each network elements of said set.

11. Capacity Management system (CMS) according to one of the claim 9 or 10, wherein said processing unit (PU) is adapted to determine said overload situation when said the difference between said measurement and said capacity license is below a given threshold.

12. Capacity Management system (CMS) according to any of the claims 9 to 11, wherein said processing unit (PU) is adapted to determine said supplementary capacity amount from comparisons between measurements and capacity licenses associated with other network elements stored in a memory (M).

13. Capacity Management system (CMS) according to any of the claims 9 to 12, wherein said processing unit (PU) is adapted to provide said supplementary capacity amount to said network element, only if said overload situation lasts during a predetermined duration.

14. Capacity Management system (CMS) according to any of the claims 9 to 13, wherein said processing unit is further adapted to
- test an under-load situation for a given network element by comparing the measurement transmitted by said network element to a capacity license allocated to it; and,
- in case under-load situation for said given network element, determine an available capacity amount, without modifying said capacity license allocated to it.

15. Radio access network (RAN) comprising a system according to any of the claims 9 to 14.
